# EUROPÄISCHE PATENTSCHRIFT

(11) **EP 4 296 626 B1**
(45) Veröffentlichungstag und Bekanntmachung des Hinweises auf die Patenterteilung: **13.08.2025**
(21) Anmeldenummer: 23176704.7
(22) Anmeldetag: 01.06.2023
(51) Int. Cl.: G01F 1/58, G01F 1/60

(54) **VERFAHREN ZUM BETREIBEN EINES MAGNETISCH-INDUKTIVEN DURCHFLUSSMESSGERÄTS UND EIN ENTSPRECHENDES MAGNETISCH-INDUKTIVES DURCHFLUSSMESSGERÄT**
METHOD FOR OPERATING A MAGNETIC-INDUCTIVE FLOW METER AND A CORRESPONDING MAGNETIC-INDUCTIVE FLOW METER
PROCÉDÉ DE FONCTIONNEMENT D'UN DÉBITMÈTRE À INDUCTION MAGNÉTIQUE ET DÉBITMÈTRE À INDUCTION MAGNÉTIQUE CORRESPONDANT

(30) Priorität: 24.06.2022 DE 102022115787
(43) Veröffentlichungstag der Anmeldung: 27.12.2023
(73) Patentinhaber: Krohne Messtechnik GmbH, 47058 Duisburg (DE)
(72) Erfinder: Förster, Jan, 45149 Essen (DE); Mathies, Nicolaus, 47443 Moers (DE)
(74) Vertreter: Gesthuysen Patentanwälte

(56) Entgegenhaltungen:
- EP-B1- 1 192 421
- DE-A1- 2 744 845
- JP-A- H10 253 412
- US-A1- 2006 235 634
- US-A1- 2013 006 544

## Beschreibung

Die Erfindung betrifft ein Verfahren zum Betreiben eines magnetisch-induktiven Durchflussmessgeräts mit einem Messrohr zum Führen eines Mediums, mit einer Magnetfelderzeugungsvorrichtung zum Erzeugen eines das Messrohr senkrecht zur Strömungsrichtung des Mediums durchsetzenden Magnetfeldes, mit einem Elektrodenpaar zum Abgreifen einer in dem Medium im Messrohr induzierten elektrischen Spannung als Messsignal und mit einer Steuer- und Auswertevorrichtung zur Ermittlung eines Durchflussmesswertes aus dem Messsignal, wobei das Messsignal in einem sich mit einer Messfensterfrequenz periodisch wiederholenden Messfenster mehrfach abgetastet wird und aus den mehrfachen, abgetasteten Messsignalen aus wenigstens einem Messfenster wenigstens ein gemittelter Durchflussmesswert bestimmt wird. Darüber hinaus betrifft die Erfindung auch ein magnetisch-induktives Durchflussmessgerät, das ein entsprechendes Verfahren durchführt.

Die zuvor genannten Durchflussmessgeräte, die auf dem magnetisch-induktiven Messprinzip beruhen, sind seit Jahrzehnten bekannt. Folglich sind auch Verfahren zum Betreiben solcher Durchflussmessgeräte, wie sie zuvor beschrieben worden sind, seit Langem bekannt. Das magnetisch-induktive Messprinzip beruht auf dem Umstand der Kraftwirkung auf Ladungsträger, die sich senkrecht zu einem Magnetfeld bewegen bzw. die eine Bewegungskomponente senkrecht zu dem betreffenden Magnetfeld haben (Lorentzkraft). Um eine Durchflussmessung auf diesem Prinzip durchführen zu können, muss das in dem Messrohr geführte Medium eine gewisse elektrische Leitfähigkeit haben. Je schneller sich das Medium durch das Messrohr und damit auch durch das von der Magnetfelderzeugungsvorrichtung erzeugte Magnetfeld bewegt, desto stärker erfolgt eine Trennung von Ladungsträgern in dem strömenden Medium des entsprechenden Messrohrabschnitts, und umso stärker wird ein durch die Ladungstrennung bewirktes elektrisches Feld, das sich zwischen den Elektroden des Messrohrs ausbildet und als elektrische Spannung zwischen den Elektroden abgenommen werden kann. Die Messspannung zwischen den Elektroden entwickelt sich proportional zur Strömungsgeschwindigkeit, jedenfalls in dem Zeitraum in dem das Magnetfeld konstant ist und die Leitfähigkeit des Mediums bzw. die Ladungsträgerkonzentration in dem Medium gleichbleibend ist.

Das eingangs erwähnte Messfenster ist ein Zeitabschnitt, innerhalb dessen eine Vielzahl von Messwerten erfasst wird, nämlich die über das Elektrodenpaar abgegriffene elektrische Spannung abgetastet wird. Aus der Mehrzahl an abgetasteten Messsignalen innerhalb eines Messfensters wird dann ein Durchflussmesswert bestimmt; häufig werden die ermittelten Messwerte beispielsweise gemittelt, um ein verbessertes Signal-Rausch-Verhältnis zu erzielen.

Aus der US 2006/235634 A1 ist ein Verfahren zum Betrieb eines Messgeräts, dessen Messbetrieb mit einer Messfrequenz getaktet wird, bekannt.

Beim Betrieb von magnetisch-induktiven Durchflussmessgeräten in typischen prozesstechnischen Anlagen ist vereinzelt und praktisch zufällig aufgefallen, dass Durchflussmesswerte zuweilen einer systematischen, langsamen periodischen Schwankung unterliegen, wobei die Periodizität in weiten Bereichen vorliegen kann, also zum Beispiel im Bereich von einigen Sekunden, einigen zehn Sekunden oder auch Minuten. Die Herkunft der Schwankungen und das Zeitverhalten sind nicht ohne Weiteres ersichtlich.

Aufgabe der vorliegenden Erfindung ist es, ein Verfahren zum Betreiben eines magnetisch-induktiven Durchflussmessgeräts anzugeben und auch ein entsprechendes magnetisch-induktives Durchflussmessgerät, mit dem das Problem systematisch auftretender Schwankungen im Durchflussmesswert erkannt und vermieden wird.

Erfindungsgemäß ist zunächst erkannt worden, dass den relativ langsamen periodischen Schwankungen des Messsignals, die sich also über viele Messfenster erstrecken, eine dem Gleichanteil des Messsignals überlagerte relativ schnelle periodische Schwankung des Messsignals zugrunde liegt, und zwar genau dann, wenn die Periodizität des überlagerten, relativ schnell schwankenden Messsignals ein ganzer Bruchteil der Periodendauer des sich periodisch wiederholenden Messfensters entspricht bzw. wenn die Frequenz des dem Gleichanteil des Messsignals überlagerten relativ schnell schwankenden Messsignals ein Mehrfaches der Messfensterfrequenz ist. In diesem Fall kommt es zu einem Schwebungseffekt, bei dem sich eine systematische, langsam veränderliche Messabweichung ergibt.

Die relativ schnelle Schwankung des Messsignals, die dem Gleichanteil des Messsignals überlagert ist, kann ganz unterschiedliche Ursachen haben, wobei es auf den physikalischen Grund der überlagerten Messsignalschwankung nicht ankommt.

Eine typische Ursache für das Auftreten schneller überlagerter Schwankungen im Messsignal ist die Auswirkung von Pumpen, deren Einfluss sich über das transportierte Medium bis zum magnetisch-induktiven Messgerät fortpflanzt. Pumpen fördern in der Regel bauformbedingt das Medium nicht vollkommen gleichmäßig, sondern pulsierend. Dabei besteht der Volumenstrom des geförderten Fluids aus einem Gleichanteil, der dem nominell geförderten Volumenstrom der Pumpe entspricht, und einem näherungsweise harmonischen Anteil, der von dem physikalischen Förderprinzip der Pumpe herrührt. So führt beispielsweise ein Schaufelblatt einer Pumpe, das am Ausgang der Pumpe vorbeidreht, zu einer kurzzeitigen Erhöhung des Volumenstroms, direkt gefolgt von einer kurzzeitigen Verringerung des Durchflusses. Neben der Variation des Durchflusses wird durch eine Pumpe auch der Druck innerhalb des bewegten Fluids periodisch variiert. Auch eine Druckschwankung kann sich auf die mit dem Elektrodenpaar erfasste Spannung und damit auf das Messsignal auswirken.

Systematische, niederfrequente Schwankungen des Durchflussmesswertes, die auf höherfrequenten überlagerten Schwankungen des Messsignals beruhen, sind an sich schwer erkennbar, da sie beispielsweise nur in bestimmten Betriebszuständen auftreten, wie bestimmten Förderleistungen von angeschlossenen Pumpen, oder weil Pumpen - oder entsprechende Schwankungen verursachende Geräte - nur zeitweise zugeschaltet werden. Beim Anlagenbetreiber besteht häufig gar nicht das Bewusstsein, dass ein solcher Fehler auftreten kann, insoweit wird beispielsweise bei der Inbetriebnahme einer Anlage auch nicht auf derartige, also auf Schwebungseffekten beruhende Schwankungen des Durchflussmesswertes gezielt geprüft.

Die Idee der vorliegenden Erfindung besteht darin, zunächst zu erkennen, ob in dem abgetasteten Messsignal ein Frequenzanteil vorhanden ist, der im Bereich eines Vielfachen der Messfensterfrequenz ist und, sollte dies der Fall sein, die Messfensterfrequenz entsprechend zu verschieben, sodass der Schwebungseffekt vermieden wird. Durch geeignetes Verschieben der Messfensterfrequenz wird natürlich nicht vermieden, dass das Messsignal die überlagerten höherfrequenten Schwankungen aufweist, es wird aber vermieden, dass diese sich niederfrequent, systematisch im Durchflussmesswert niederschlagen, die Schwankungen machen sich dann vielmehr hochfrequent um den eigentlichen Durchflussmesswert herum bemerkbar und verschwinden, wenn schon über einige wenige Messfenster eine Mittelung der Durchflussmesswerte vorgenommen wird, was im Schwebungsfall eben nicht möglich ist.

Bei dem Verfahren zum Betreiben eines magnetisch-induktiven Durchflussmessgeräts ist deshalb zunächst vorgesehen, dass durch eine Frequenzanalyse der mehrfachen, abgetasteten Messsignale zumindest eines Messfensters ein Amplitudenspektrum der abgetasteten Messsignale des Messfensters erhalten wird. In einem bewährten Ausführungsbeispiel wird dazu eine Fast-Fourier-Analyse der abgetasteten Messwerte durchgeführt (FFT).

Dann ist erfindungsgemäß vorgesehen, dass durch eine Peak-Detektion wenigstens ein Störungs-Peak im Amplitudenspektrum und die zugehörige Störungs-Peak-Frequenz ermittelt werden, also ein solcher Peak, dessen Peak-Frequenz nicht Vielfache der Messfensterfrequenz sind.

Eine kritische Messsituation wird identifiziert, indem überprüft wird, ob die ermittelte Störungs-Peak-Frequenz eine vorgegebene kritische Frequenzdistanz zu einem Vielfachen der Messfensterfrequenz unterschreitet. Schließlich wird beim Vorliegen einer kritischen Messsituation eine neue Messfensterfrequenz ermittelt und als neue Messfensterfrequenz eingestellt, sodass im Ergebnis keine kritische Messsituation mehr vorliegt.

Bei dem erfindungsgemäßen magnetisch-induktiven Durchflussmessgerät wird das Verfahren implementiert durch entsprechende Ausgestaltung der Steuer- und Auswertevorrichtung, die dann so eingerichtet ist, dass sie im Betriebszustand die Frequenzanalyse durchführt, die zuvor geschilderte Peak-Detektion, die Identifizierung einer kritischen Messsituation sowie schließlich die Ermittlung und Einstellung einer neuen Messfensterfrequenz, sodass im Ergebnis keine kritische Messsituation mehr vorliegt.

Eine bevorzugte Ausgestaltung des Verfahrens zeichnet sich dadurch aus, dass die Überprüfung, ob die ermittelte Störungs-Peak-Frequenz eine vorgegebene kritische Frequenzdistanz zu einem Vielfachen der Messfensterfrequenz unterschreitet, durch Berechnung der Beträge der Differenzen der ermittelten Störungs-Peak-Frequenz zu dem Vielfachen der Messfensterfrequenz berechnet wird und die Beträge der Differenzen jeweils verglichen werden mit der vorgegebenen kritischen Frequenzdistanz.

Von Interesse ist natürlich, wie eine vorgegebene kritische Frequenzdistanz sinnvoll zu bemessen ist. Diesbezüglich zeichnet sich eine besonders bevorzugte Ausgestaltung des Verfahrens dadurch aus, dass die vorgegebene kritische Frequenzdistanz nicht kleiner als 1/25 der Messfensterfrequenz, vorzugsweise nicht kleiner als 1/50 der Messfensterfrequenz gewählt wird und/oder dass die vorgegebene kritische Frequenzdistanz nicht größer als 1/10 der Messfensterfrequenz, vorzugsweise nicht größer als 1/6 der Messfensterfrequenz gewählt wird.

In einer weiteren Ausgestaltung des Verfahrens hat es sich als sinnvoll herausgestellt, dass die neue Messfensterfrequenz so gewählt wird, dass sie größer ist als die geltende Messfensterfrequenz und/oder dass die neue Messfensterfrequenz so gewählt wird, dass sie möglichst wenig von der geltenden Messfensterfrequenz abweicht. Eine möglichst geringe Abweichung von der zuvor geltenden Messfensterfrequenz hat sich deshalb als sinnvoll herausgestellt, weil die Kalibrierung eines magnetisch-induktiven Durchflussmessgeräts in der Regel mit der ursprünglichen Messfensterfrequenz erfolgt ist und mit zunehmender Abweichung der neuen Messfensterfrequenz von der ursprünglichen Messfensterfrequenz die Güte der Kalibrierung für das Gerät nachlässt.

Eine weitere Weiterbildung des Verfahrens zeichnet sich dadurch aus, dass eine Mehrzahl von Messfensterfrequenzen als mögliche neue Messfensterfrequenzen vorgegeben ist und bei der Ermittlung der neuen Messfensterfrequenz eine Messfensterfrequenz aus der Mehrzahl der vorgegebenen möglichen neuen Messfensterfrequenzen ausgewählt wird. Vorzugsweise werden auch Kalibrierdaten zu einer oder mehrerer der Messfensterfrequenzen als mögliche neue Messfensterfrequenzen vorgegeben, sodass der Messbetrieb dann mit den zugehörigen Kalibrierdaten weitergeführt wird.

Alternativ zu der Auswahl aus mehreren möglichen neuen Messfensterfrequenzen, die vorgegeben sind, wird die neue Messfensterfrequenz bestimmt auf Grundlage einer Berechnung unter Berücksichtigung der vorgegebenen kritischen Frequenzdistanz und der ermittelten Störungs-Peak-Frequenz.

Bevorzugte Ausgestaltungen des Verfahrens sind dadurch gekennzeichnet, dass mit der Magnetfelderzeugungsvorrichtung die Orientierung des Magnetfeldes mit einer Umschaltfrequenz periodisch umgeschaltet wird, wobei die Messfensterfrequenz mit der Umschaltfrequenz so synchronisiert wird, dass ein Messfenster innerhalb eines Intervalls konstanter Orientierung des Magnetfelds liegt. Insbesondere wird die Größe des Messfensters so gewählt, dass sich das Messfenster jedenfalls in einem Bereich konstanter Feldstärke des Magnetfeldes erstreckt. Bei dieser Betriebsart handelt es sich um den üblichen Betrieb der meisten magnetisch-induktiven Durchflussmessgeräte. Der Grund liegt darin, dass durch die Umschaltung des Magnetfeldes die Trennrichtung der verschieden geladenen oder polarisierten Teilchen oder Moleküle umgekehrt wird, sodass sich elektrochemische Effekte, die zu einer Messwertverfälschung führen können, nicht etablieren. Ferner lassen sich so Offset-Spannungen der Elektrodenspannung herausrechnen. Wenn das Magnetfeld mit der Umschaltfrequenz umgeschaltet wird, kann die Messfensterfrequenz nicht unabhängig von der Umschaltfrequenz des Magnetfeldes geändert werden, die Umschaltfrequenz muss entsprechend mitgeändert werden.

Bei einer bevorzugten Ausgestaltung des Verfahrens ist deshalb vorgesehen, dass bei Vorliegen einer kritischen Messsituation die neue Messfensterfrequenz indirekt eingestellt wird durch Wahl einer neuen Umschaltfrequenz des Magnetfeldes. Entsprechend sind dann mögliche neue Umschaltfrequenzen des Magnetfeldes vorgegeben, durch deren Wahl sich automatisch auch die Messfensterfrequenz ändert; der Zusammenhang ist direkt und eindeutig. Alles was zuvor in Bezug auf die Handhabung der Messfensterfrequenz gesagt worden ist, kann in diesem Fall auch auf die Umschaltfrequenz des Magnetfeldes übertragen werden.

Bei einer weiteren bevorzugten Ausgestaltung des Verfahrens werden mehrere Amplitudenspektren der abgetasteten Messsignale mehrerer Messfenster gemittelt und das gemittelte Amplitudenspektrum wird zur Peak-Detektion herangezogen.

Alle bislang beschriebenen Ausgestaltungen des Verfahrens sind auch bei dem magnetisch-induktiven Durchflussmessgerät realisiert, nämlich durch entsprechende Ausgestaltung der Steuer- und Auswerteeinheit, die die korrespondierenden Verfahrensschritte im Betrieb des magnetisch-induktiven Durchflussmessgeräts durchführt.

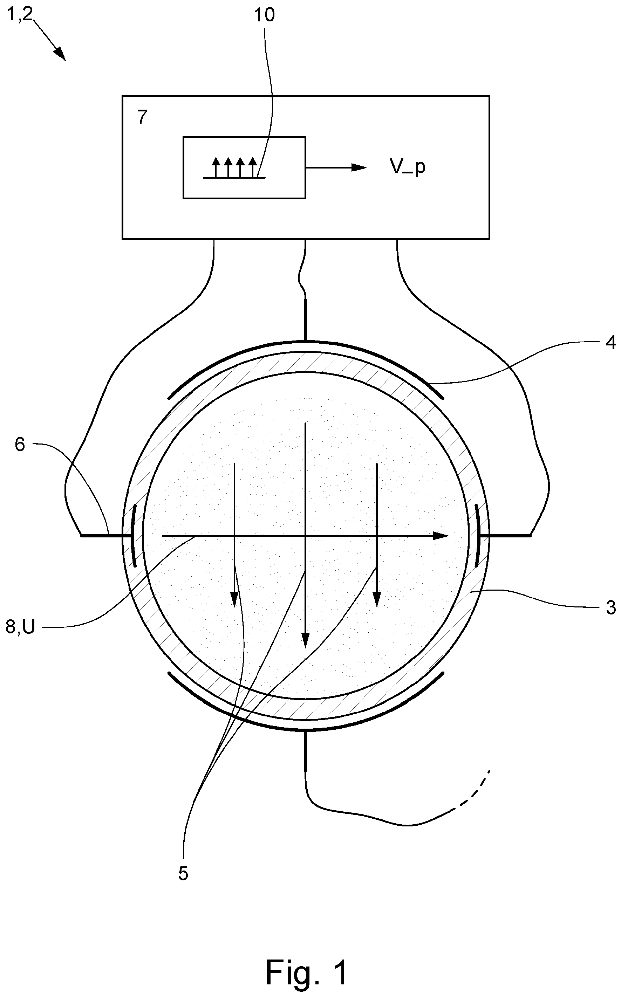

Im Einzelnen gibt es nun eine Vielzahl von Möglichkeiten, das erfindungsgemäße Verfahren zum Betreiben eines magnetisch-induktiven Durchflussmessgeräts und das entsprechende magnetisch-induktive Durchflussmessgerät auszugestalten und weiterzubilden. Dazu wird verwiesen auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch ein magnetisch-induktives Durchflussmessgerät und ein Verfahren zum Betreiben eines solchen magnetisch-induktiven Durchflussmessgeräts,

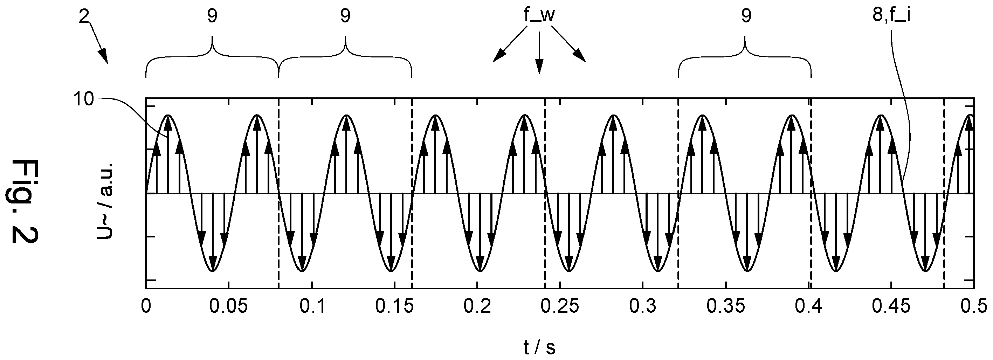

- Fig. 2: einen pulsierenden überlagerten Signalanteil auf dem Messsignal, wobei das Messsignal um seinen Gleichanteil bereinigt ist, sowie Messfenster zur zeitlichen Begrenzung der Abtastung des Messsignals,

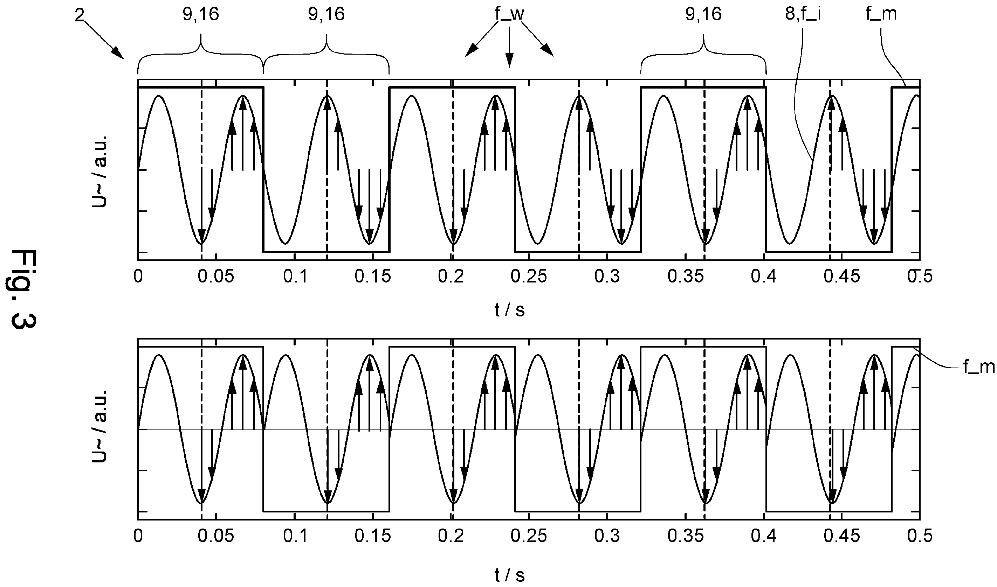

- Fig. 3: wiederum schematisch den zeitlichen Verlauf eines überlagerten periodischen Signalanteils auf dem Messsignal, ebenfalls bereinigt um den Gleichanteil, mit einer Umschaltung der Orientierung des Magnetfeldes sowie einer ausgeprägten Schwebung, die durch pulsierende Druckschwankungen verursacht wird,

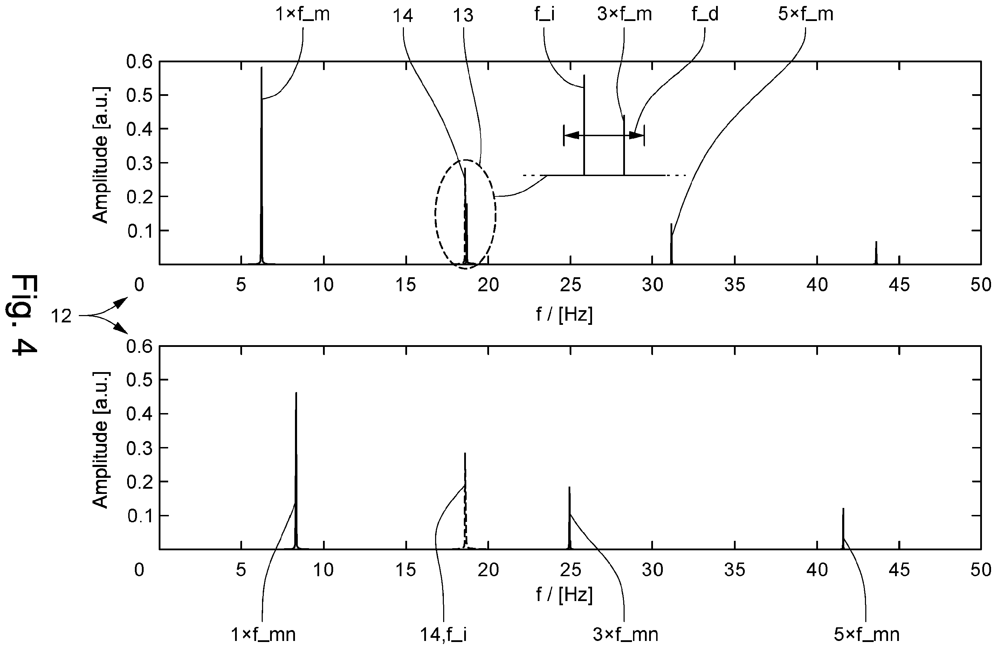

- Fig. 4: vereinfacht ein Amplitudenspektrum zur Darstellung der Situation aus Fig. 3 im Frequenzbereich mit einem Störungs-Peak nahe bei einem ungeradzahligen Vielfachen der Messfensterfrequenz bzw. der Umschaltfrequenz des Magnetfeldes, sowie das Amplitudenspektrum nach Änderung der Messfensterfrequenz bzw. der Umschaltfrequenz des Magnetfeldes (unten),

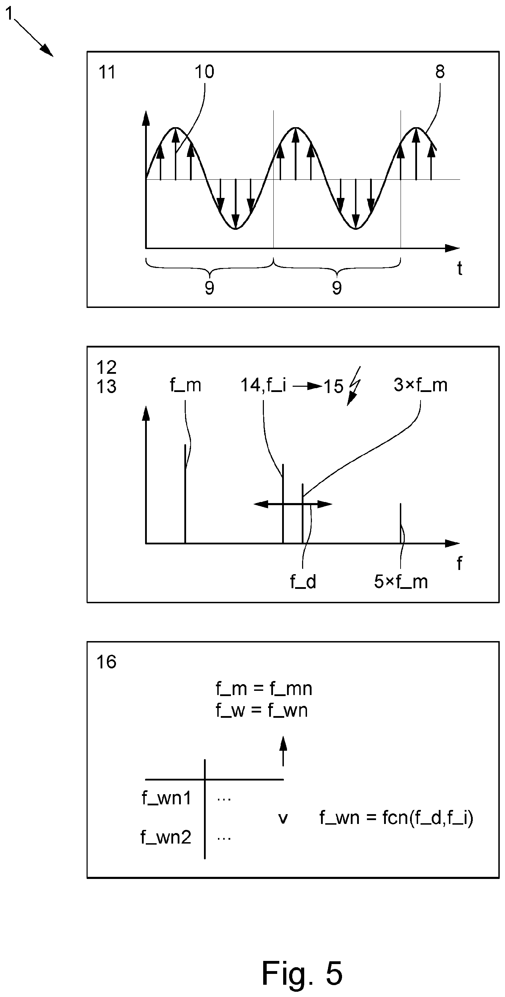

- Fig. 5: schematisch das Verfahren zur zum Betreiben des magnetisch-induktiven Durchflussmessgeräts mit den Schritten der Abtastung des Messsignals, der Frequenzanalyse, der Peak-Detektion, der Identifizierung einer kritischen Messsituation und der Ermittlung und Einstellung einer neuen Messfensterfrequenz bzw. einer Umschaltfrequenz des Magnetfeldes und

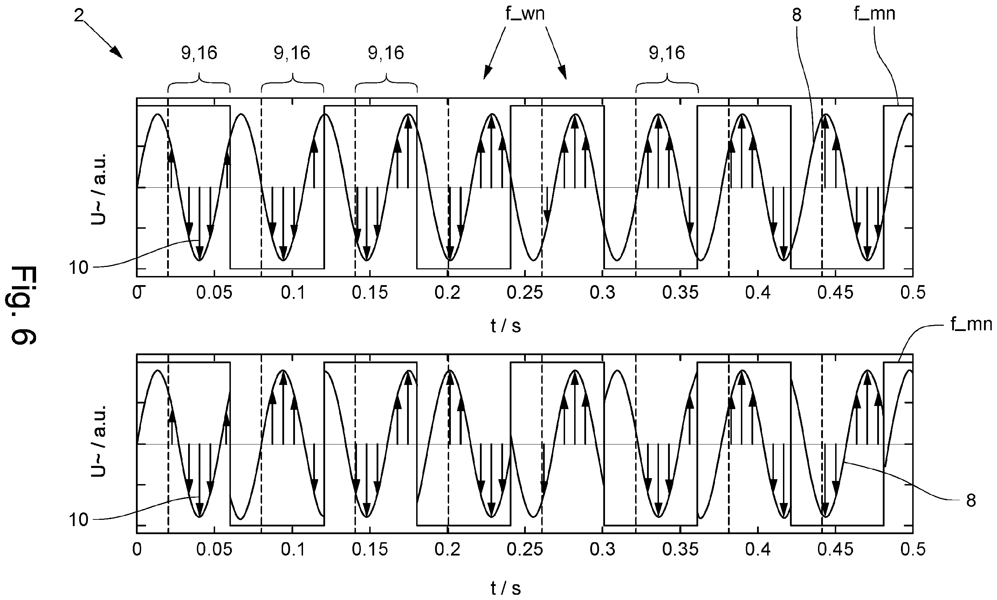

- Fig. 6: schematisch im Zeitbereich das Ergebnis des Verfahrens zum Betreiben eines magnetisch-induktiven Durchflussmessgeräts zur Vermeidung von Schwebungseffekten bei hochfrequenten pulsierenden Störungen im Messsignal im Bereich eines Vielfachen der Messfensterfrequenz bzw. der Umschaltfrequenz des Magnetfeldes nach Einstellung einer neuen Messfensterfrequenz bzw. einer neuen Umschaltfrequenz des Magnetfeldes.

In Fig. 1 ist schematisch ein Verfahren 1 zum Betreiben eines magnetisch-induktiven Durchflussmessgeräts 2, vor allem aber ein magnetisch-induktives Durchflussmessgerät 2 mit seinen wesentlichen Komponenten dargestellt, nämlich mit einem Messrohr 3 zum Führen eines Mediums, mit einer Magnetfelderzeugungsvorrichtung 4 zum Erzeugen eines das Messrohr 3 senkrecht zur Strömungsrichtung des Mediums durchsetzenden Magnetfeldes 5, mit einem Elektrodenpaar 6 zum Abgreifen einer in dem Medium im Messrohr 3 induzierten elektrischen Spannung als Messsignal 8, U und mit einer Steuer- und Auswertevorrichtung 7 zur Ermittlung eines Durchflussmesswertes V_p aus dem Messsignal 8, U, wobei das Messsignal 8, U in einem sich mit einer Messfensterfrequenz f_w periodisch wiederholenden Messfenster 9 mehrfach abgetastet wird und aus den mehrfach, abgetasteten Messsignalen 10 aus wenigstens einem Messfenster 9 wenigstens ein gemittelter Durchflussmesswert V_p bestimmt wird.

In der Steuer- und Auswertevorrichtung 7 ist das nachfolgend beschriebene Verfahren 1 implementiert, üblicherweise durch Programmierung entsprechender elektronischer Komponenten, wie beispielsweise eines Mikrocontrollers oder eines digitalen Signalprozessors. Die Steuer- und Auswerteeinheit umfasst darüber hinaus üblicherweise weitere bekannte Schritte der Signalverarbeitung, wie das hochohmige Abgreifen und verstärken des Rohmesssignals von den Elektroden, die Tiefpassfilterung der Messsignale, um ein Aliasing zu vermeiden usw.; dies steht hier jedoch nicht im Vordergrund.

In Fig. 2 ist schematisch dargestellt ein überlagertes pulsierendes Messsignal U~ des Messsignals 8, ohne den Gleichanteil des Messsignals 8, das als induzierte elektrische Spannung U von dem Elektrodenpaar 6 aus dem Medium abgegriffen wird; die Vernachlässigung des Gleichanteils dient der Verdeutlichung des hier interessierenden Effektes. Dargestellt ist ferner auch das sich mit der Messfensterfrequenz f_w periodisch wiederholende Messfenster 9, wobei hier eine Umschaltung des Magnetfeldes 5 zunächst außer Acht gelassen worden ist.

Die Pulsation im Durchfluss wird hier durch eine Pumpe verursacht, die prinzipbedingt tatsächlich eine Schwankung im Durchfluss erzeugt, der pulsierende Durchfluss ist also keineswegs etwa fehlerhaft, sondern entspricht den tatsächlichen Verhältnissen. Die relativ hochfrequente Überlagerung ändert im Mittel jedoch nichts an dem mittleren Durchfluss, der eigentlich nur von Interesse ist und auch im zeitlichen Rahmen der Ermittlung eines gemittelten Durchflussmesswertes V_p üblicherweise auch nicht in Erscheinung tritt, außer in der speziellen Situation, wenn die Messfensterfrequenz f_w (bzw. die Umschaltfrequenz f_m des Magnetfeldes, wie nachfolgend noch erläutert wird) gerade nahe an einem Vielfachen der überlagerten pulsierenden Schwankung des Messsignals 8 ist. Innerhalb eines Messfensters 9 werden durch Abtastung der analogen Messspannung U eine Mehrzahl an abgetasteten Messsignalen 10 erhalten. Beispielsweise durch Mittelung dieser abgetasteten Messsignale 10 ergibt sich dann der Durchflussmesswert V_p.

Anhand von Fig. 2 ist die Entstehung einer Schwebungs-Problematik gut nachvollziehbar. Wenn die überlagerten Schwingungen des Messsignals 8 innerhalb eines Messfensters 9 von Messfenster 9 zu Messfenster 9 mit einem großen Phasenversatz innerhalb der Messfenster 9 liegen, dann springt der Mittelwert der Abtastwerte 10 von Messintervall zu Messintervall um den nicht dargestellten Gleichwert des Messsignals 8 und es ergibt sich kein Problem; diese Situation ist dargestellt in Fig. 2. In Zusammenhang mit der Erfindung ist erkannt worden, dass sich ein Problem in Form einer messtechnischen Schwebung dann ergibt, wenn sich die überlagerte Schwingung des Messsignals 8 nur mit langsamer Veränderung von Messfenster 9 zu Messfenster 9 fortpflanzt, wenn also die Frequenz der überlagerten Schwingung des Messsignals 8 nahe einem Frequenzvielfachen der Messfensterfrequenz f_w ist.

In Fig. 3 sind gegenüber Fig. 2 zwei neue Aspekte dargestellt. Mit der Magnetfelderzeugungsvorrichtung 4 wird die Orientierung des Magnetfeldes 5 mit einer Umschaltfrequenz f_m periodisch umgeschaltet; dies ist der übliche Fall beim Betrieb von magnetisch-induktiven Durchflussmessgeräten 1. Die Messfensterfrequenz f_w wird mit der Umschaltfrequenz f_m so synchronisiert, dass ein Messfenster 9 innerhalb eines Intervalls konstanter Orientierung des Magnetfelds 5 liegt. In Fig. 3 ist ebenfalls zu sehen, dass nicht die gesamte Zeit innerhalb einer Magnetfeldorientierung zur Erfassung von abgetasteten Messsignalen 10 genutzt wird, vielmehr die Größe des Messfensters 9 so gewählt wird, dass sich das Messfenster 9 jeweils in einem Bereich 16 konstanter Feldstärke des Magnetfeldes 5 erstreckt, weshalb nach dem Umschaltzeitpunkt eine gewisse Zeit gewartet wird, bis abgetastete Messsignale 10 erhoben werden bzw. tatsächlich auch zur Ermittlung des Durchflussmesswertes V_p herangezogen werden.

Mit der Umschaltung der Orientierung des Magnetfeldes 5 ändert sich auch die Polarität der mit dem Elektrodenpaar 6 abgegriffenen induzierten elektrischen Spannung U, weshalb die Messsignale 8, U in einer Orientierung des Magnetfeldes 5 als solche verwendet werden und in der dazu entgegengesetzten Orientierung des Magnetfeldes 5 um 180° phasenversetzt werden, was einer Multiplikation mit -1 entspricht. Die maßgebliche Größe zum praktischen Betrieb des magnetisch-induktiven Durchflussmessgeräts ist dann also die Umschaltfrequenz f_m des Magnetfeldes, mit deren Änderung sich automatisch die Messfensterfrequenz f_w ändert.

Fig. 3 zeigt im oberen Diagramm eine pulsierende Überlagerung im Durchfluss, die durch eine Pumpe erzeugt wird, und im unteren Diagramm die Auswirkung eines pulsierenden Drucks auf das Messsignal 8, der ebenfalls durch eine Pumpe erzeugt wird.

Die Pulsationen im Durchfluss als auch die Pulsationen im Druck führen zu der dargestellten Beeinflussung des Messsignals 8. Da der Durchfluss, anders als der Druck, ein dem Magnetfeld 5 folgendes Signal in dem Messsignal 5 des magnetisch-induktiven Durchflussmessgeräts erzeugt, führen Pulsationen des Durchflusses zu Schwebungseffekten, wenn die Frequenz des überlagerten schwankenden Messsignals (bedingt durch den Einfluss beispielsweise einer Pumpe) ein gerades Vielfaches der Magnetfeldumpolung f_m ist. Pulsationen des Drucks hingegen führen zu Schwebungen, wenn die Frequenz des überlagerten schwankenden Messsignals (bedingt durch den Einfluss beispielsweise einer Pumpe) ein ungerades Vielfaches der Magnetfeldumpolung f_m ist. Es könnte demnach grundsätzlich zwischen diesen beiden Ursachen unterschieden werden. Da deren Auswirkungen sich jedoch gleich verhalten, ist eine Unterscheidung nicht erforderlich, ihnen kann mit den gleichen Gegenmaßnahmen begegnet werden.

Fig. 3 zeigt einen ungünstigen Fall, der zu starken Schwebungen führt, jedenfalls bei den durch den Druckschwankungen verursachten Schwankungen im Messsignal (unten). Das magnetisch-induktive Durchflussmessgerät wird mit einer Umschaltfrequenz f_m = 6,25 Hz (1/8 von 50 Hz) des Magnetfeldes 5 betrieben, die hier unterstellte Pumpe erzeugt eine Pulsation mit f_i = 18,6 Hz. Damit beträgt die Pulsation der Pumpe das 2,976-fache der Umschaltfrequenz f_m des Magnetfeldes 5. Dies ist nahe der dreifachen Umschaltfrequenz des Magnetfeldes 5 und führt zu Schwebungen. In der unteren Darstellung von Fig. 3 ist gut zu erkennen, wie im Bereich 16 konstanter Feldstärke des Magnetfeldes 5 über viele Messfenster 9 die überlagerten Schwankungen im Messsignal 8 sich nur geringfügig ändern und so zu einem systematischen Messfehler über viele Periodendauern des Messfensters 9 führen.

Zur Vermeidung derartiger Fehler ist bei dem Verfahren 1 zum Betreiben eines magnetisch-induktiven Durchflussmessgeräts 2 und bei den entsprechend ausgestalteten magnetisch-induktiven Durchflussmessgeräten vorgesehen, dass durch eine Frequenzanalyse 11 der mehrfachen, abgetasteten Messsignale 10 zumindest eines Messfensters 9 - bzw. der Messfenster 9 innerhalb einer Umschaltperiodendauer 1/f_m des Magnetfeldes 5 - ein Amplitudenspektrum 12 der abgetasteten Messsignale 10 des Messfensters 9 - bzw. der abgetasteten Messsignale 10 der Messfenster 9 innerhalb einer Umschaltperiodendauer 1/f_m des Magnetfeldes 5 - erhalten wird, dass durch eine Peak-Detektion 13 wenigstens ein Störungs-Peak 14 im Amplitudenspektrum 12 und die zugehörige Störungs-Peak-Frequenz f_i ermittelt werden, also ein solcher Peak 14, dessen Peak-Frequenz f_i nicht Vielfache der Messfensterfrequenz f_w - bzw. Vielfache der Umschaltfrequenz f_m des Magnetfeldes 5 - sind. Eine kritische Messsituation 15 wird identifiziert, indem überprüft wird, ob die ermittelte Störungs-Peak-Frequenz f_i eine vorgegebene kritische Frequenzdistanz f_d zu einem Vielfachen der Messfensterfrequenz f_w (bzw. zu einem Vielfachen der Umschaltfrequenz f_m des Magnetfeldes 5) unterschreitet. Bei Vorliegen einer kritischen Messsituation 15 wird eine neue Messfensterfrequenz f_wn (bzw. wird eine neue Umschaltfrequenz f_mn des Magnetfeldes 5) ermittelt und als Messfensterfrequenz f_w (bzw. als Umschaltfrequenz f_m des Magnetfeldes 5) eingestellt, sodass keine kritische Messsituation 15 mehr vorliegt.

Fig. 4 zeigt in der oberen Darstellung in einer vereinfachten Fassung das durch die Frequenzanalyse 11 erhaltene Amplitudenspektrum 12, bei dem also über die Signalfrequenz die Signalamplituden aufgetragen werden als Veranschaulichung der frequenzabhängigen Energieverteilung des analysierten Messsignals 8. In der oberen Darstellung sind die Einflüsse der Umschaltung des Magnetfeldes 5 bei ungeraden Vielfachen der Umschaltfrequenz f_m von 6.25 Hz zu sehen. Dicht bei der dreifachen Umschaltfrequenz f_m des Magnetfeldes bei 18,75 Hz liegt die Frequenz f_i des dem Messsignal 8 überlagerten pulsierenden Messsignalanteils bei einer Frequenz von f_i von 18,6 Hz. Die Nähe dieser Frequenzen führt zu Schwebungseffekten im abgetasteten Messsignal 10 und damit in dem Durchflussmesswert V_p.

Im vorliegenden Beispiel ist die Überprüfung auf eine kritische Messsituation 15 durchgeführt worden mit einer vorgegebenen kritischen Frequenzdistanz von 1 Hz, es liegt also eine kritische Messsituation 15 vor.

Dadurch veranlasst, ist eine neu Messfensterfrequenz f_wn ermittelt worden, hier mittelbar durch Ermittlung und Vorgabe einer neuen Umschaltfrequenz f_mn des Magnetfeldes 5, wobei die Umschaltfrequenz f_m des Magnetfeldes auf 8,33 Hz (1/6 von 50 Hz) geändert worden ist. Daher beträgt die Pulsation nun das 2,23-fache der neuen Umschaltfrequenz f_mn, was weit genug entfernt ist von der Peak-Frequenz f_i und nun nicht mehr zu störenden Schwebungen führt. Dies ist in der unteren Darstellung von Fig. 4 im Frequenzbereich anhand des Amplitudenspektrums 12 gezeigt.

Das Verfahren 1 ist in Fig. 5 nochmals in den einzelnen Schritten dargestellt. Der obere Block von Fig. 5 zeigt, dass durch die Frequenzanalyse 11 der mehrfachen, abgetasteten Messsignale 10 zumindest eines Messfensters 9, hier der Messfenster in einer Periode der unveränderten Orientierung des Magnetfeldes 5, ein Amplitudenspektrum 12 der abgetasteten Messsignale 10 der Messfenster 9 erhalten wird. Das Amplitudenspektrum 12 ist im mittleren Block der Fig. 5 dargestellt.

Anhand des Amplitudenspektrums 12 wird eine Peak-Detektion 13 durchgeführt. Mittels der Peak-Detektion 13 werden im dargestellten Fall ein Störungs-Peak 14 im Amplitudenspektrum 12 und die zugehörige Störungs-Peak-Frequenz f_i ermittelt. Dabei handelt es sich um einen Peak 14, dessen Peak-Frequenz f_i nicht ein Vielfaches der Messfensterfrequenz f_w bzw. hier der Umschaltfrequenz f_m des Magnetfelds 5 ist.

Ebenfalls im mittleren Block von Fig. 5 ist gezeigt, dass eine kritische Messsituation 15 identifiziert wird, indem überprüft wird, ob die ermittelte Störungs-Peak-Frequenz f_i die vorgegebene kritische Frequenzdistanz f_d zu einem Vielfachen der Messfensterfrequenz f_w bzw. hier der Umschaltfrequenz f_m des Magnetfeldes 5 unterschreitet, was im Ausführungsbeispiel der Fall ist.

Im unteren Block in Fig. 5 ist schließlich dargestellt, dass aufgrund des Vorliegens einer kritischen Messsituation 15 eine neue Messfensterfrequenz f_wn bzw. hier eine neue Umschaltfrequenz f_mn des Magnetfeldes 5 ermittelt und als Messfensterfrequenz f_w bzw. als Umschaltfrequenz f_m des Magnetfeldes 5 eingestellt wird, sodass keine kritische Messsituation 15 mehr vorliegt.

In dem dargestellten Ausführungsbeispiel basiert die Überprüfung, ob die ermittelte Störungs-Peak-Frequenz f_i eine vorgegebene kritische Frequenzdistanz f_d zu einem Vielfachen der Messfensterfrequenz f_w bzw. zu einem Vielfachen der Umschaltfrequenz f_m des Magnetfeldes 5 unterschreitet, auf der Berechnung der Beträge der Differenzen der ermittelten Störungs-Peak-Frequenz f_i zu den Vielfachen der Messfensterfrequenz f_w bzw. zu den Vielfachen der Umschaltfrequenz f_m des Magnetfeldes 5; die Beträge der Differenzen werden jeweils verglichen werden mit der vorgegebenen kritischen Frequenzdistanz f_d.

Bei dem dargestellten Verfahren 1 und dem dargestellten magnetisch-induktiven Durchflussmessgerät 2 ist realisiert worden, dass die neue Messfensterfrequenz f_wn bzw. die neue Umschaltfrequenz f_mn des Magnetfeldes 5 so gewählt wird, dass sie größer ist als die geltende Messfensterfrequenz f_w bzw. größer ist als die geltende Umschaltfrequenz f_mn des Magnetfeldes 5, denn sie ist im Ausführungsbeispiel von 6,25 Hz auf 8,33 Hz erhöht worden.

Im unteren Block von Fig. 5 ist dargestellt, dass die Vorgabe einer neuen Messfensterfrequenz f_wn bzw. einer neuen Umschaltfrequenz f_mn des Magnetfeldes 5 auf unterschiedliche Art und Weise realisiert sein kann. Zum einen kann eine Mehrzahl von Messfensterfrequenzen f_w bzw. von Umschaltfrequenzen f_m als mögliche neue Messfensterfrequenzen f_wn bzw. Umschaltfrequenzen f_mn vorgegeben sein, angedeutet durch die Tabelle im unteren Block von Fig. 5. Bei der Ermittlung der neuen Messfensterfrequenz f_wn bzw. der neuen Umschaltfrequenz f_mn wird eine Messfensterfrequenz f_wn aus der Mehrzahl der vorgegebenen möglichen neuen Messfensterfrequenzen f_wn bzw. eine Umschaltfrequenz f_mn aus der Mehrzahl der vorgegebenen möglichen neuen Umschaltfrequenzen f_mn ausgewählt und neu eingestellt zum weiteren Betrieb des magnetisch-induktiven Durchflussmessgeräts 2.

Eine andere Art der Ermittlung und Vorgabe einer neuen Messfensterfrequenz f_wn bzw. einer neuen Umschaltfrequenz f_mn des Magnetfeldes 5 besteht darin, dass die neue Messfensterfrequenz f_wn bzw. die neue Umschaltfrequenz f_mn des Magnetfeldes 5 bestimmt wird auf Grundlage einer Berechnung unter Berücksichtigung der vorgegeben kritischen Frequenzdistanz f_d, angedeutet durch die Funktion f_wn = fcn(f_d, f_i) im unteren Block von Fig. 5.

Es hat sich als vorteilhaft erwiesen, dass mehrere Amplitudenspektren 12 der abgetasteten Messsignale 10 mehrerer Messfenster 9 gemittelt werden und das gemittelte Amplitudenspektrum zur Peak-Detektion 13 herangezogen wird.

In Fig. 6 ist das Ergebnis der Anwendung des Verfahrens 1, das zuvor anhand der Fig. 4, unten und anhand der Fig. 5 erläutert worden ist, auch im Zeitbereich dargestellt. Es ist zu erkennen, dass sich bei der neu gewählten Messfensterfrequenz f_wn bzw. bei der neu gewählten Umschaltfrequenz f_mn des Magnetfeldes 5 kein Schwebungseffekt mehr einstellt, also keine sich über mehrere Messfensterperioden bzw. über mehrerer Umschaltperioden des Magnetfeldes 5 erstreckende systematisch zu hohe oder zu niedrige Ermittlung des Durchflussmesswertes V_p.

### Bezugszeichen

- 1: Verfahren
- 2: magnetisch-induktives Durchflussmessgerät
- 3: Messrohr
- 4: Magnetfelderzeugungsvorrichtung
- 5: Magnetfeld
- 6: Elektrodenpaar
- 7: Steuer- und Auswertevorrichtung
- 8: Messsignal
- 9: Messfenster
- 10: abgetastete Messsignale
- 11: Frequenzanalyse
- 12: Amplitudenspektrum
- 13: Peak-Detektion
- 14: Peak
- 15: kritische Messsituation
- 16: Bereich konstanter Feldstärke des Magnetfeldes 5
- V_p: Durchflussmesswert
- U: Messsignal
- U~: überlagerter pulsierender Wechselanteil des Messsignals
- f_w: Messfensterfrequenz
- f_i: Peak_Frequenz
- f_d: kritische Frequenzdistanz
- f_wn: neue Messfensterfrequenz
- f_m: Umschaltfrequenz des Magnetfeldes
- f_mn: neue Umschaltfrequenz des Magnetfeldes

## Patentansprüche

1. Verfahren (1) zum Betreiben eines magnetisch-induktiven Durchflussmessgeräts (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes (5), mit einem Elektrodenpaar (6) zum Abgreifen einer in dem Medium im Messrohr (3) induzierten elektrischen Spannung als Messsignal (8,U) und mit einer Steuer- und Auswertevorrichtung (7) zur Ermittlung eines Durchflussmesswertes aus dem Messsignal (8,U), wobei das Messsignal (8,U) in einem sich mit einer Messfensterfrequenz f w periodisch wiederholenden Messfenster (9) mehrfach abgetastet wird und aus den mehrfachen, abgetasteten Messsignalen (10) aus wenigstens einem Messfenster (9) wenigstens ein gemittelter Durchflussmesswert (V p) bestimmt wird,
wobei durch eine Frequenzanalyse (11) der mehrfachen, abgetasteten Messsignale (10) zumindest eines Messfensters (9) ein Amplitudenspektrum (12) der abgetasteten Messsignale (10) des Messfensters (9) erhalten wird,
wobei durch eine Peak-Detektion (13) wenigstens ein Störungs-Peak (14) im Amplitudenspektrum (12) und die zugehörige Störungs-Peak-Frequenz (f i) ermittelt werden, also ein solcher Peak (14), dessen Peak-Frequenz (f i) nicht Vielfache der Messfensterfrequenz (f_w) sind, **dadurch gekennzeichnet,**
**dass** eine kritische Messsituation (15) identifiziert wird, indem überprüft wird, ob die ermittelte Störungs-Peak-Frequenz (f i) eine vorgegebene kritische Frequenzdistanz (f d) zu einem Vielfachen der Messfensterfrequenz (f w) unterschreitet und
**dass** bei Vorliegen einer kritischen Messsituation (15) eine neue Messfensterfrequenz (f wn) ermittelt und als Messfensterfrequenz (f w) eingestellt wird, sodass keine kritische Messsituation (15) mehr vorliegt.

2. Verfahren (1) nach Anspruch 1, **dadurch gekennzeichnet, dass** die Überprüfung, ob die ermittelte Störungs-Peak-Frequenz (f i) eine vorgegebene kritische Frequenzdistanz (f d) zu einem Vielfachen der Messfensterfrequenz (f w) unterschreitet, durch Berechnung der Beträge der Differenzen der ermittelten Störungs-Peak-Frequenz (f i) zu den Vielfachen der Messfensterfrequenz (f w) berechnet wird und die Beträge der Differenzen jeweils verglichen werden mit der vorgegebenen kritischen Frequenzdistanz (f_d).

3. Verfahren (1) nach Anspruch 1 oder 2, **dadurch gekennzeichnet, dass** die vorgegebene kritische Frequenzdistanz (f_d) nicht kleiner als 1/25 der Messfensterfrequenz (f_w), vorzugsweise nicht kleiner als 1/50 der Messfensterfrequenz (f_w) gewählt wird und/oder dass die vorgegebene kritische Frequenzdistanz (f_d) nicht größer als 1/10 der Messfensterfrequenz (f_w), vorzugsweise nicht größer als 1/6 der Messfensterfrequenz (f_w) gewählt wird.

4. Verfahren (1) nach einem der Ansprüche 1 bis 3, **dadurch gekennzeichnet, dass** die neue Messfensterfrequenz (f_wn) so gewählt wird, dass sie größer ist als die geltende Messfensterfrequenz (f_w) und/oder dass die neue Messfensterfrequenz (f_wn) so gewählt wird, dass sie möglichst wenig von der geltenden Messfensterfrequenz (f_w) abweicht.

5. Verfahren (1) nach einem der Ansprüche 1 bis 4, **dadurch gekennzeichnet, dass** eine Mehrzahl von Messfensterfrequenzen (f_w) als mögliche neue Messfensterfrequenzen (f_wn) vorgegeben ist und bei der Ermittlung der neuen Messfensterfrequenz (f_wn) eine Messfensterfrequenz (f_wn) aus der Mehrzahl der vorgegebenen möglichen neuen Messfensterfrequenzen (f_wn) ausgewählt wird.

6. Verfahren nach einem der Ansprüche 1 bis 4, **dadurch gekennzeichnet, dass** die neue Messfensterfrequenz (f_wn) bestimmt wird auf Grundlage einer Berechnung unter Berücksichtigung der vorgegeben kritischen Frequenzdistanz (f_d).

7. Verfahren (1) nach einem der Ansprüche 1 bis 6, **dadurch gekennzeichnet, dass** mit der Magnetfelderzeugungsvorrichtung (4) die Orientierung des Magnetfeldes (5) mit einer Umschaltfrequenz (f_m) periodisch umgeschaltet wird, wobei die Messfensterfrequenz (f_w) mit der Umschaltfrequenz (f_m) so synchronisiert wird, dass ein Messfenster (9) innerhalb eines Intervalls konstanter Orientierung des Magnetfelds (5) liegt, insbesondere wobei die Größe des Messfensters (9) so gewählt wird, dass sich das Messfenster (9) jeweils in einem Bereich (16) konstanter Feldstärke des Magnetfeldes (5) erstreckt.

8. Verfahren (1) nach Anspruch 7, **dadurch gekennzeichnet, dass** bei Vorliegen einer kritischen Messsituation (15) die neue Messfensterfrequenz (f_wn) indirekt eingestellt wird durch Wahl einer neuen Umschaltfrequenz (f_mn) des Magnetfeldes (5).

9. Verfahren (1) nach einem der Ansprüche 1 bis 8, **dadurch gekennzeichnet, dass** mehrere Amplitudenspektren (12) der abgetasteten Messsignale (10) mehrerer Messfenster (9) gemittelt werden und das gemittelte Amplitudenspektrum zur Peak-Detektion (13) herangezogen wird.

10. Magnetisch-induktives Durchflussmessgerät (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes (5), mit einem Elektrodenpaar (6) zum Abgreifen einer in dem Medium im Messrohr induzierten elektrischen Spannung als Messsignal (8, U) und mit einer Steuer- und Auswertevorrichtung (7) zur Ermittlung eines Durchflussmesswertes (V p) aus dem Messsignal (8, U), wobei das Messsignal (8, U) in einem sich mit einer Messfensterfrequenz (f w) periodisch wiederholenden Messfenster (9) mehrfach abgetastet wird und aus den mehrfachen, abgetasteten Messsignalen (10) aus wenigstens einem Messfenster (9) wenigstens ein gemittelter Durchflussmesswert (V p) bestimmt wird,
wobei die Steuer- und Auswertevorrichtung (7) im Betriebszustand durch eine Frequenzanalyse (11) der mehrfachen, abgetasteten Messsignale (10) zumindest eines Messfensters (9) ein Amplitudenspektrum (12) der abgetasteten Messsignale (10) des Messfensters (9) ermittelt,
wobei die Steuer- und Auswertevorrichtung (7) durch eine Peak-Detektion (13) wenigstens einen Störungs-Peak (14) im Amplitudenspektrum (12) und die zugehörige Störungs-Peak-Frequenz (f i) ermittelt, also einen solchen Peak, dessen Peak-Frequenz (f i) nicht Vielfache der Messfensterfrequenz (f_w) sind, **dadurch gekennzeichnet,**
**dass** die Steuer- und Auswertevorrichtung (7) eine kritische Messsituation (15) identifiziert, indem die Steuer- und Auswertevorrichtung (7) überprüft, ob die ermittelte Stör-Peak-Frequenz (f i) eine vorgegebene kritische Frequenzdistanz (f d) zu einem Vielfachen der Messfensterfrequenz (f w) unterschreitet und
**dass** die Steuer- und Auswertevorrichtung (7) bei Vorliegen einer kritischen Messsituation (15) eine neue Messfensterfrequenz (f_wn) ermittelt und als Messfensterfrequenz (f_w) einstellt, sodass keine kritische Messsituation (15) mehr vorliegt.

11. Magnetisch-induktives Durchflussmessgerät (2) nach Anspruch 10, **dadurch gekennzeichnet, dass** die Steuer- und Auswertevorrichtung (7) im Betriebszustand des magnetisch-induktiven Durchflussmessgeräts (2) die Verfahrensschritte gemäß dem Kennzeichnungsteil wenigstens eines Anspruchs der Ansprüche 2 bis 9 ausführt.

## Claims

1. Method (1) for operating a magnetic-inductive flowmeter (2) with a measuring tube (3) for guiding a medium, with a magnetic field generator (4) for generating a magnetic field (5) passing through the measuring tube (3) perpendicular to the direction of flow of the medium, with a pair of electrodes (6) for tapping an electrical voltage induced in the medium in the measuring tube (3) as a measuring signal (8, U) induced in the medium in the measuring tube (3), and having a control and evaluation device (7) for determining a flow measurement value from the measuring signal (8, U), wherein the measuring signal (8, U) is sampled a plurality of times in a measuring window (9) periodically repeating at a measuring window frequency f_w, and at least one averaged flow measurement value (V_p) is determined from the multiple sampled measurement signals (10) from at least one measuring window (9)
wherein an amplitude spectrum (12) of the sampled measuring signals (10) of at least one measuring window (9) is obtained by a frequency analysis (11) of the multiple, sampled measuring signals (10),
wherein at least one interference peak (14) in the amplitude spectrum (12) and the associated interference peak frequency (f_i) are determined by a peak detection (13), i.e. such a peak (14) whose peak frequency (f_i) is not a multiple of the measuring window frequency (f_w),
**characterized in**
**that** a critical measurement situation (15) is identified by checking whether the determined interference peak frequency (f_i) falls below a predetermined critical frequency distance (f_d) to a multiple of the measuring window frequency (f_w) and
**that**, in the presence of a critical measurement situation (15), a new measuring window frequency (f_wn) is determined and set as the measuring window frequency (f_w), so that a critical measurement situation (15) is no longer present.

2. Method (1) according to claim 1, **characterized in that** the check as to whether the determined interference peak frequency (f_i) falls below a predetermined critical frequency distance (f_d) to a multiple of the measuring window frequency (f_w) is calculated by calculating the amounts of the differences of the determined interference peak frequency (f_i) to the multiples of the measuring window frequency (f_w), and the amounts of the differences are, in each case, compared with the predetermined critical frequency distance (f_d).

3. Method (1) according to any one of claims 1 or 2, **characterized in that** the predetermined critical frequency distance (f_d) is selected to be not smaller than 1/25 of the measuring window frequency (f_w), preferably not smaller than 1/50 of the measuring window frequency (f_w), and/or that the predetermined critical frequency distance (f_d) is selected to be not larger than 1/10 of the measuring window frequency (f_w), preferably not larger than 1/6 of the measuring window frequency (f_w).

4. Method (1) according to any one of claims 1 to 3, **characterized in that** the new measuring window frequency (f_wn) is selected such that it is greater than the applicable measuring window frequency (f_w) and/or **in that** the new measuring window frequency (f_wn) is selected such that it deviates as little as possible from the applicable measuring window frequency (f_w).

5. Method (1) according to any one of claims 1 to 4, **characterized in that** a plurality of measuring window frequencies (f_w) is predetermined as possible new measuring window frequencies (f_wn) and, when determining the new measuring window frequency (f_wn), a measuring window frequency (f_wn) is selected from the plurality of predetermined possible new measuring window frequencies (f_wn).

6. Method according to any one of claims 1 to 4, **characterized in that** the new measuring window frequency (f_wn) is determined on the basis of a calculation taking into account the predetermined critical frequency distance (f_d).

7. Method (1) according to any one of claims 1 to 6, **characterized in that** the orientation of the magnetic field (5) is periodically switched over with a switching frequency (f_m) by means of the magnetic field generator (4), wherein the measuring window frequency (f_w) is synchronized with the switching frequency (f_m) in such a way that a measuring window (9) lies within an interval of constant orientation of the magnetic field (5), in particular wherein the size of the measuring window (9) is selected such that the measuring window (9) extends, in each case, in a range (16) of constant field strength of the magnetic field (5).

8. Method (1) according to claim 7, **characterized in that**, in the presence of a critical measuring situation (15), the new measuring window frequency (f_wn) is set indirectly by selecting a new switching frequency (f_mn) of the magnetic field (5).

9. Method (1) according to any one of claims 1 to 8, **characterized in that** a plurality of amplitude spectra (12) of the sampled measuring signals (10) of a plurality of measuring windows (9) are averaged and the averaged amplitude spectrum is used for peak detection (13).

10. Magnetic-inductive flowmeter (2) having a measuring tube (3) for guiding a medium, having a magnetic field generator (4) for generating a magnetic field (5) passing through the measuring tube (3) perpendicular to the direction of flow of the medium, having a pair of electrodes (6) for tapping an electrical voltage induced in the medium in the measuring tube as a measuring signal (8, U) and with a control and evaluation unit (7) for determining a flow measurement value (V_p) from the measuring signal (8, U), wherein the measuring signal (8, U) is sampled several times in a measuring window (9) periodically repeating at a measuring window frequency (f_w) and at least one averaged flow measurement value (V_p) is determined from the multiple sampled measuring signals (10) from at least one measuring window (9),
wherein the control and evaluation unit (7) determines an amplitude spectrum (12) of the sampled measuring signals (10) of at least one measuring window (9) in the operating state by means of a frequency analysis **(11)** of the multiple, sampled measuring signals (10),
wherein the control and evaluation unit (7) determines at least one interference peak (14) in the amplitude spectrum (12) and the associated interference peak frequency (f_i) by a peak detection (13), i.e. such a peak whose peak frequency (f_i) is not a multiple of the measuring window frequency (f_w),
**characterized in**
**that** the control and evaluation unit (7) identifies a critical measuring situation (15) by the control and evaluation unit (7) checking whether the determined interference peak frequency (f_i) falls below a predetermined critical frequency distance (f_d) to a multiple of the measuring window frequency (f_w), and
**that** the control and evaluation unit (7) determines a new measuring window frequency (f_wn) in the presence of a critical measuring situation (15) and sets it as measuring window frequency (f_w) so that there is no longer a critical measuring situation (15).

11. Magnetic-inductive flowmeter (2) according to claim 10, **characterized in that** the control and evaluation unit (7) performs the method steps according to the characterizing portion of at least one claim of claims 2 to 9 in the operating state of the magnetic-inductive flowmeter (2).

## Revendications

1. Procédé (1) pour faire fonctionner un débitmètre magnéto-inductif (2) comprenant un tube de mesure (3), pour guider un fluide, un dispositif (4) générateur de champ magnétique, pour générer un champ magnétique (5) traversant le tube de mesure (3) perpendiculairement à la direction d'écoulement du fluide, une paire d'électrodes (6), pour détecter une tension électrique induite dans le fluide dans le tube de mesure (3) en tant que signal de mesure (8, U), et un dispositif (7) de commande et d'évaluation, pour déterminer une valeur de mesure du débit à partir du signal de mesure (8, U), le signal de mesure (8, U) étant échantillonné plusieurs fois dans une fenêtre de mesure (9) se répétant périodiquement avec une fréquence de fenêtre de mesure (f w) et au moins une valeur de mesure de débit moyenne (V p) étant déterminée à partir des multiples signaux de mesure échantillonnés (10) provenant d'au moins une fenêtre de mesure (9),
une analyse de fréquence (11) des multiples signaux de mesure échantillonnés (10) d'au moins une fenêtre de mesure (9) permettant d'obtenir un spectre d'amplitude (12) des signaux de mesure échantillonnés (10) de la fenêtre de mesure (9),
une détection de pic (13) permettant de déterminer au moins un pic de perturbation (14) dans le spectre d'amplitude (12) et la fréquence de pic de perturbation (f i) correspondante, c'est-à-dire un pic (14) dont la fréquence de pic (f i) n'est pas un multiple de la fréquence de fenêtre de mesure (f_w), **caractérisé en ce qu'**une situation de mesure critique (15) est identifiée en vérifiant si la fréquence de pic de perturbation déterminée (f i) est inférieure à une distance de fréquence critique prédéfinie (f d) par rapport à un multiple de la fréquence de la fenêtre de mesure (f w), et
**en ce qu'**en cas de situation de mesure critique (15), une nouvelle fréquence de fenêtre de mesure (f wn) est déterminée et définie comme fréquence de fenêtre de mesure (f w) de manière à ce qu'il n'y ait plus de situation de mesure critique (15).

2. Procédé (1) selon la revendication 1, **caractérisé en ce que** la vérification visant à déterminer si la fréquence de pic de perturbation (f i) déterminée est inférieure à une distance de fréquence critique prédéfinie (f d) par rapport à un multiple de la fréquence de la fenêtre de mesure (f w) est effectuée en calculant les valeurs absolues des différences entre la fréquence de pic de perturbation déterminée (f i) et les multiples de la fréquence de la fenêtre de mesure (f w) et en comparant les valeurs absolues des différences à la distance de fréquence critique prédéfinie (f_d).

3. Procédé (1) selon la revendication 1 ou la revendication 2, **caractérisé en ce que** la distance critique prédéfinie entre les fréquences (f_d) n'est pas inférieure à 1/25 de la fréquence de la fenêtre de mesure (f_w), de préférence pas inférieure à 1/50 de la fréquence de la fenêtre de mesure (f_w) et/ou **en ce que** la distance de fréquence critique prédéfinie (f_d) n'est pas supérieure à 1/10 de la fréquence de la fenêtre de mesure (f_w), de préférence pas supérieure à 1/6 de la fréquence de la fenêtre de mesure (f_w).

4. Procédé (1) selon l'une des revendications 1 à 3, **caractérisé en ce que** la nouvelle fréquence de fenêtre de mesure (f_wn) est choisie de manière à être supérieure à la fréquence de fenêtre de mesure applicable (f_w) et/ou **en ce que** la nouvelle fréquence de fenêtre de mesure (f_wn) est choisie de manière à s'écarter le moins possible de la fréquence de fenêtre de mesure applicable (f_w).

5. Procédé (1) selon l'une des revendications 1 à 4, **caractérisé en ce qu'**une pluralité de fréquences de fenêtre de mesure (f_w) est prédéfinie comme nouvelles fréquences de fenêtre de mesure possibles (f_wn) et **en ce qu'**une fréquence de fenêtre de mesure (f_wn) est sélectionnée parmi la pluralité de nouvelles fréquences de fenêtre de mesure possibles prédéfinies (f_wn) lors de la détermination de la nouvelle fréquence de fenêtre de mesure (f_wn) .

6. Procédé selon l'une des revendications 1 à 4, **caractérisé en ce que** la nouvelle fréquence de fenêtre de mesure (f_wn) est déterminée sur la base d'un calcul tenant compte de la distance de fréquence critique prédéfinie (f_d).

7. Procédé (1) selon l'une des revendications 1 à 6, **caractérisé en ce que** l'orientation du champ magnétique (5) est commutée périodiquement à une fréquence de commutation (f_m) au moyen du dispositif de génération de champ magnétique (4), la fréquence de fenêtre de mesure (f_w) étant synchronisée avec la fréquence de commutation (f_m) de telle sorte qu'une fenêtre de mesure (9) se trouve à l'intérieur d'un intervalle d'orientation constante du champ magnétique (5), la taille de la fenêtre de mesure (9) étant notamment choisie de telle sorte que la fenêtre de mesure (9) s'étende dans chaque cas dans une zone (16) d'intensité constante du champ magnétique (5).

8. Procédé (1) selon la revendication 7, **caractérisé en ce que**, en présence d'une situation de mesure critique (15), la nouvelle fréquence de fenêtre de mesure (f_wn) est réglée indirectement par sélection d'une nouvelle fréquence de commutation (f_mn) du champ magnétique (5).

9. Procédé (1) selon l'une des revendications 1 à 8, **caractérisé en ce que** plusieurs spectres d'amplitude (12) des signaux de mesure échantillonnés (10) de plusieurs fenêtres de mesure (9) sont moyennés et le spectre d'amplitude moyenné est utilisé pour la détection de pic (13).

10. Débitmètre magnéto-inductif (2) comprenant un tube de mesure (3), destiné à guider un fluide, un dispositif (4) générateur de champ magnétique, destiné à générer un champ magnétique (5) traversant le tube de mesure (3) perpendiculairement à la direction d'écoulement du fluide, avec une paire d'électrodes (6) pour détecter une tension électrique induite dans le fluide dans le tube de mesure en tant que signal de mesure (8, U) et avec un dispositif (7) de commande et d'évaluation pour déterminer une valeur de mesure de débit (V p) à partir du signal de mesure (8, U), le signal de mesure (8, U) étant échantillonné plusieurs fois dans une fenêtre de mesure (9) se répétant périodiquement avec une fréquence de fenêtre de mesure (f w) et au moins une valeur de mesure de débit (V p) moyenne étant déterminée à partir des signaux de mesure (10) échantillonnés plusieurs fois provenant d'au moins une fenêtre de mesure (9),
le dispositif (7) de commande et d'évaluation déterminant, à l'état de fonctionnement, par une analyse de fréquence (11) des multiples signaux de mesure échantillonnés (10) d'au moins une fenêtre de mesure (9), un spectre d'amplitude (12) des signaux de mesure échantillonnés (10) de la fenêtre de mesure (9),
le dispositif (7) de commande et d'évaluation déterminant, par une détection de pic (13), au moins un pic de perturbation (14) dans le spectre d'amplitude (12) et la fréquence de pic de perturbation (f i) associée, c'est-à-dire un pic dont la fréquence de pic (f i) n'est pas un multiple de la fréquence de fenêtre de mesure (f_w), **caractérisé**
**en ce que** le dispositif (7) de commande et d'évaluation identifie une situation de mesure critique (15), en vérifiant par le dispositif de commande et d'évaluation (7) si la fréquence de pic de perturbation (f i) déterminée est inférieure à une distance de fréquence critique (f d) prédéfinie par rapport à un multiple de la fréquence de la fenêtre de mesure (f w) et
**en ce que** le dispositif (7) de commande et d'évaluation, en présence d'une situation de mesure critique (15), détermine une nouvelle fréquence de fenêtre de mesure (f_wn) et la définit comme étant la fréquence de fenêtre de mesure (f_w), de sorte qu'il n'y ait plus de situation de mesure critique (15).

11. Débitmètre magnéto-inductif (2) selon la revendication 10, **caractérisé en ce que** le dispositif (7) de commande et d'évaluation, dans l'état de fonctionnement du débitmètre magnéto-inductif (2), met en œuvre les étapes consistant à procédé selon la partie caractéristique d'au moins une des revendications 2 à 9.
